(19) **Europäisches Patentamt**

**European Patent Office**

**Office européen des brevets**

(11) **EP 0 973 355 A2**

(12) **EUROPÄISCHE PATENTANMELDUNG**

(43) Veröffentlichungstag:
**19.01.2000 Patentblatt 2000/03**

(51) Int. Cl.[7]: **H04R 1/22**, H04R 1/08,
H04R 1/10, H04M 1/03

(21) Anmeldenummer: **99113735.7**

(22) Anmeldetag: **13.07.1999**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **15.07.1998 DE 19831771**

(71) Anmelder:
**W.L. GORE & ASSOCIATES GmbH**
**85640 Putzbrunn (DE)**

(72) Erfinder: **Schwarz, Robert**
**81369 München (DE)**

(74) Vertreter:
**Klunker . Schmitt-Nilson . Hirsch**
**Winzererstrasse 106**
**80797 München (DE)**

(54) **Kunstoffkapselung für akustischen Wandler**

(57) Die Erfindung betrifft eine Kunststoffkapselung für einen akustischen Wandler bzw. einen gekapselten akustischen Wandler zum Einbau in ein Gehäuse insbesondere von Telekommunikationseinrichtungen sowie ein Verfahren zur Herstellung derselben.

Akustische Wandler sind häufig in Kunststoffkapselungen eingelagert, um sie vor akustischen Störeinflüssen zu schützen und um gewisse akustische Eigenschaften zu erzeugen oder zu verstärken. Darüber hinaus sind häufig die akustischen Eingänge der akustischen Wandler mit akustisch transparenten Reibungselementen, wie textilen Flächengebilden oder Membranen, versehen, die aufgrund ihrer akustischen Impedanz den Schalldruck, der die akustischen Eingänge der Wandler erreicht, gezielt beeinflußt.

Mit der Erfindung wird vorgeschlagen, diese akustisch transparenten Reibungselemente nicht an den akustischen Eingängen der Wandler anzubringen, sondern an den Schalldrucköffnungen der die akustischen Wandler umgebenden Kunststoffkapselung. Vorzugsweise werden die akustisch transparenten Reibungselemente beim Spritzgießen der Kunststoffkapselung unmittelbar mit in die Kunststoffkapselung eingespritzt bzw. an diese angespritzt.

Die erfindungsgemäßen gekapselten akustischen Wandler sind vergleichsweise einfach und zuverlässig herstellbar und eignen sich für die Massenproduktion.

FIG.1A

EP 0 973 355 A2

**Beschreibung**

Die vorliegende Erfindung betrifft eine Kunststoffkapselung für einen akustischen Wandler sowie einen gekapselten akustischen Wandler zum Einbau in ein Gehäuse insbesondere einer Telekommunikationseinrichtung und ein Verfahren zur Herstellung eines solchen gekapselten akustischen Wandlers.

Akustische Wandler wie Mikrophone, Lautsprecher und dergleichen werden häufig in Kunststofformteile eingepreßt oder montiert, um dann als Einheit in Gehäuse von z.B. Telekommunikationseinrichrungen eingebaut zu werden. Die Kunststofformteile sind notwendig, um spezielle akustische Leistungsmerkmale der akustischen Wandler, wie Klangqualität, baßlastiger oder höherlastiger Frequenzgang, Hintergrundrauschen, etc. je nach Anwendungszweck zu optimieren. Aus diesem Grund sind die Kunststofformteile üblicherweise aus einem weichen Kunststoff oder Gummi hergestellt und definieren einen Aufnahmeraum für den akustischen Wandler, wobei der Aufnahmeraum so bemessen ist, daß der akustische Wandler exakt in das Kunststofformteil hineinpaßt. Das Kunststofformteil bildet somit eine Kapselung für den akustischen Wandler.

Eine solche Kunststoffkapselung weist eine oder mehrere Schalldrucköffnungen auf, durch die der Schall den oder die akustischen Eingänge des in der Kunststoffkapselung aufgenommenen akustischen Wandlers erreichen kann. Die Anzahl der Schalldrucköffnungen und die Lage des akustischen Wandlers in der Kunststoffkapselung haben wesentlichen Einfluß auf den akustischen Charakter der Vorrichtung. Bei einem Mikrophon mit "unidirektionalem" Charakter ist nur eine Schalldrucköffnung vorgesehen, und der akustische Eingang des Wandlers ist relativ weit von dieser Schalldrucköffnung entfernt, so daß nur gerichteter Schall den Wandler erreicht. Bei einem Mikrophon mit "omnidirektionalem" Charakter hingegen liegt der akustische Eingang des Wandlers nahe an der Schalldrucköffnung, so daß Schall aus unterschiedlichsten Richtungen den akustischen Eingang des Wandlers erreichen kann. Mikrophone mit "bidirektionalem" Charakter haben zwei Eingänge, die vorzugsweise in einem 90° Winkel zueinander angeordnet sind. Damit können Hintergrundgeräusche bzw. ungerichtete Schallanteile eliminiert werden, indem die durch die Schalldrucköffnungen jeweils einfallenden Schalldrücke auf gegenüberliegende Seiten einer als akustischer Wandler wirkenden Membran geleitet werden, so daß sich die ungerichteten Schalldruckpegel der Hintergrundgeräusche gegeneinander aufheben.

Die akustischen Leistungsmerkmale der akustischen Wandler werden jedoch nicht allein durch die Art und Struktur der Kunststoffkapselung bestimmt, sondern darüber hinaus sind auf dem akustischen Wandler selbst separate akustisch transparente Reibungselemente in Form von textilen Flächengebilden oder Membranen angebracht, denen eine akustische Impedanz zukommt. Vielfach sind diese Reibungselemente porös und dadurch luftdurchlässig, um die akustische Impedanz zu erzielen. Das heißt, der Schalldruck erreicht zwar aufgrund der Luftdurchlässigkeit des Reibungselements nachwievor den akustischen Eingang des akustischen Wandlers, jedoch entstehen charakteristische Reibungs- bzw. Schalldruckverluste, so daß mittels dieser akustisch transparenten Reibungselemente gezielt akustische Effekte erreichbar sind. Das akustisch transparente Reibungselement bildet somit zusätzlich zu der Kunststoff-bzw. Gummikapselung ein weiteres, von der Art und Struktur der Kunststoffkapselung unabhängiges Dämpfungselement. Die Eigenschaften eines porösen Dämpfungselements hängen insbesondere ab von Materialdicke. Porosität und Nennporengröße. "Akustisch transparent" heißt in diesem Zusammenhang, daß die Schallenergie durch das Reibungselement um 0 bis 20 dB beeinflußt wird, je nach gewünschter Charakteristik.

Bisher wurden die akustisch transparenten Reibungselemente unmittelbar auf dem akustischen Wandler, zum Beispiel einem Mikrophon, aufgebracht, zum Beispiel aufgeklebt. Das so vorbereitete Mikrophon wurde dann in die Kunststoffkapselung eingesetzt, um daraufhin als Einheit in einem Gehäuse, zum Beispiel eines mobilen Telefons, an geeigneter Stelle befestigt zu werden.

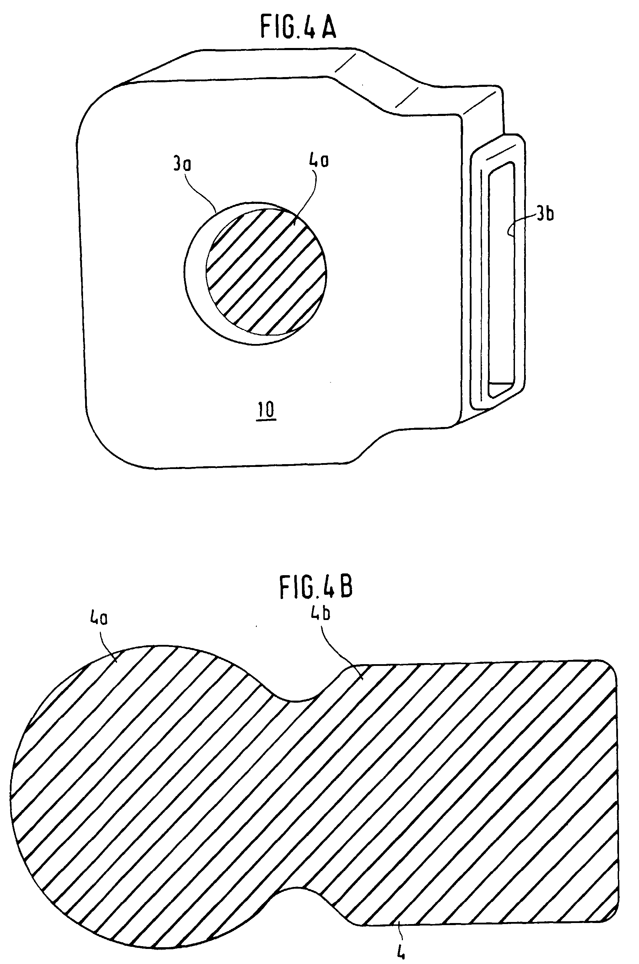

In den Figuren 4a und 4b ist eine Vorrichtung nach dem Stand der Technik am Beispiel eines bidirektionalen Wandlers dargestellt. Die Kunststoffkapselung 10 weist zwei Öffnungen 3a, 3b auf. In der Kunststoffkapselung 10 ist ein bidirektionaler Wandler so eingesetzt, daß dessen akustische Eingänge hinter den Öffnungen 3a, 3b zu liegen kommen. Die akustischen Eingänge sind mit einer selbstklebenden Membran 4 abgedeckt, die vor dem Einsetzen des Wandlers in die Kunststoffkapselung 10 auf dem Wandler aufgebracht wurde. Ein entsprechender Membranzuschnitt 4 mit Bereichen 4a und 4b zur Abdeckung der akustischen Eingänge gegen die Öffnungen 3a bzw. 3b ist in Figur 4b exemplarisch dargestellt. Solche Kunststoffkapselungen haben im Telekommunikationsbereich üblicherweise Abmessungen im Millimeterbereich und sind z.B. etwa 6 bis 8 mm breit bzw. tief und etwa 5 bis 6 mm hoch. Die Öffnungen können rund oder eckig sein, z.B. mit einem Durchmesser von 3,5 mm oder einer Kantenlänge von 2 mm x 2,8 mm.

Das Anbringen der akustisch transparenten Membran auf dem akustischen Wandler ist jedoch in mehrfacher Hinsicht problematisch. Einerseits liegt die Größe akustischer Wandler insbesondere im Telekommunikationsbereich, wie oben angegeben, in der Größenordnung von nur wenigen Millimetern mit weiter abnehmender Tendenz. Ein gezieltes Anbringen der Membran ist dadurch schwierig, aufwendig und entsprechend kostenintensiv. Andererseits muß der so vorbereitete akustische Wandler anschließend in die Kunststoffkapselung eingesetzt werden, die, wie oben beschrieben, mit ihren Innenmaßen exakt auf die Außenmaße des akustischen Wandlers abgestimmt ist. Beim Einsetzen können daher die aufgeklebten Membrane an Kanten hängenbleiben oder sich reibungsbedingt wieder von dem akustischen Wandler lösen, was insbesondere bei Mikrophonen mit bidirektionalem Verhalten kritisch ist, da bei dieser Ausführungsart beim Einsetzen des Wandlers in die Kunststoffkapselung regelmäßig eine der Membranen an einer Innenwand der Kunststoffkapselung entlanggeschoben werden muß. Im Hinblick auf die Massenfertigung ist ein einfacheres und zuverlässigeres Herstellungsverfahren wünschenswert, das eine gleichbleibend hochwertige Qualität gewährleistet.

Aufgabe der vorliegenden Erfindung ist es daher, einen gekapselten akustischen Wandler mit akustisch transparentem Reibungselement zum Einbau in ein Gehäuse insbesondere einer Telekommunikationseinrichtung zu schaffen, welcher ohne viel Aufwand und in zuverlässiger Weise herstellbar ist.

Diese Aufgabe wird erfindungsgemäß durch die Merkmale der unabhängigen Ansprüche gelöst. Der Kern der Lösung ist darin zu sehen, daß das akustisch transparente Reibungselement nicht direkt auf dem akustischen Wandler sondern in bzw. an der Schalldrucköffnung der Kunststoffkapselung befestigt wird, indem es vorzugsweise beim Spritzen der Kunststoffkapselung angespritzt oder umspritzt wird.

Die Verbindung des akustisch transparenten Reibungselements, ein Flächentextil oder eine Membran, mit der erfindungsgemäßen Kunststoffkapselung kann entweder formschlüssig oder kraftschlüssig erfolgen. Als formschlüssige Verbindung bietet sich eine Schnappverbindung an, wobei das Schnappelement direkt an die Kunststoffkapselung, die üblicherweise spritzgegossen wird, angespritzt werden kann. In diesem Falle braucht das Reibungselement lediglich vor die Schalldrucköffnung plaziert und mittels Schnappverbindung eingeklemmt zu werden. Ein unbeabsichtiges Verschieben des Reibungselements beim Einsetzen des akustischen Wandlers ist somit ausgeschlossen, und dementsprechend ist auch das Anbringen des Reibungselements wesentlich unkritischer verglichen mit dem Aufkleben der Membran direkt auf dem akustischen Wandler.

Bevorzugt wird jedoch eine erfindungsgemäße Kunststoffkapselung, bei der das akustisch transparente Reibungselement bereits bei der Herstellung der Kunststoffkapselung durch "Umspritzen" bzw. "Anspritzen" fixiert wird. Auch dabei handelt es sich um eine formschlüssige Verbindung des Reibungselements mit der Kunststoffkapselung. Im Falle des "Anspritzens" wird der Formschluß dadurch erzeugt, daß das Kunststoffmaterial der Kunststoffkapselung in Poren und Rauhigkeiten zumindest von Teilbereichen der Textil- oder Membranoberfläche eingreift, während die gegenüberliegende Oberfläche frei von Kunststoff bleibt. Es hat sich herausgestellt, daß diese formschlüssige Verbindung völlig ausreichend ist. Eine noch stabilere Verbindung läßt sich jedoch erreichen, wenn das Reibungselement in seinem Randbereich kontinuierlich von einer Reibungselementoberfläche zu einer gegenüberliegenden Reibungselementoberfläche mit Kunststoffmaterial "umspritzt" wird.

Eine kraftschlüssige Verbindung des Reibungselements mit der Kunststoffkapselung ist zum Beispiel durch Adhäsionskräfte mittels Klebstoff möglich.

Weitere vorteilhafte Ausgestaltungen sind in den Unteransprüchen definiert und ergeben sich aus der nachfolgenden Beschreibung einer bevorzugten Ausführungsform.

In den Figuren bezeichnen:

Figur 1a eine Kunststoffkapselung für einen bidirektionalen akustischen Wandler im Querschnitt,

Figur 1b die Kunststoffkapselung nach Figur 1a in einem demgegenüber um 90° gedrehten Querschnitt,

Figur 2a eine Kunststoffkapselung für einen omnidirektionalen Wandler im Querschnitt, mit angespritztem Verschlußdeckel,

Figur 2b die Kunststoffkapselung aus Figur 2a mit geöffnetem, angespritzten Verschlußdeckel,

Figur 3 eine weitere Kunststoffkapselung gemäß der vorliegenden Erfindung mit einem angespritzten Reibungselement (4a) und einem umspritzten Reibungselement (4b),

Figur 4a eine perspektivische Ansicht einer Kunststoffkapselung aus dem Stand der Technik, in die ein bidirektionaler akustischer Wandler mit aufgeklebter Membran eingesetzt ist, und

Figur 4b einen selbstklebenden Membranzuschnitt nach dem Stand der Technik zur Verwendung in einer Vorrichtung nach Figur 4a.

In den Figuren sind gleiche Bauteile unterschiedlicher Ausführungsformen mit identischen Bezugsziffern bezeichnet.

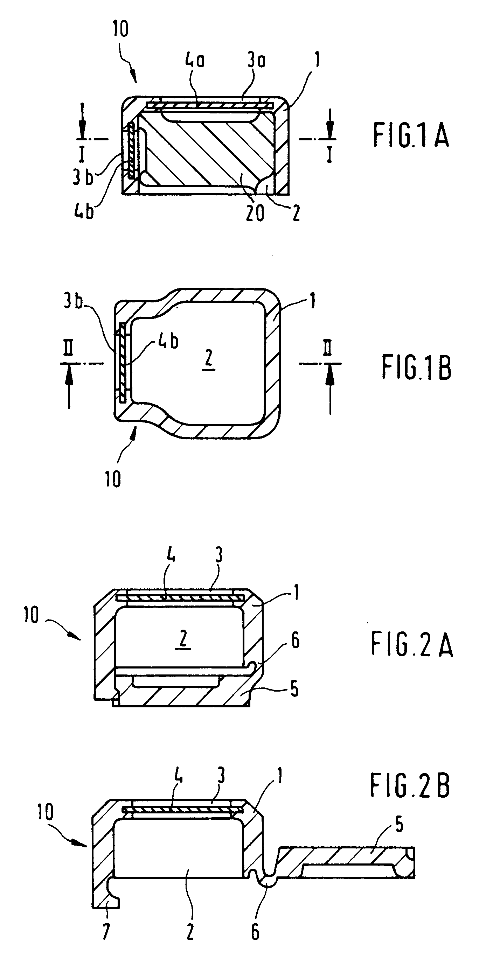

In den Figuren 1 bis 3 sind erfindungsgemäße Kunststoffkapselungen 10 für akustische Wandler dargestellt, die so oder ähnlich zum Einbau in ein Gehäuse zum Beispiel einer Telekommunikationseinrichtung verwendet werden. Die Kunststoffkapselungen 10 definieren durch ihre Wandung 1 einen Aufnahmeraum 2 zur Aufnahme eines nur in Figur 1a exemplarisch dargestellten akustischen Wandlers 20. In den Wandungen 1 sind Schalldrucköffnungen 3 bzw. 3a und 3b vorgesehen, durch die der Schall aus der Umgebung zu dem bzw. den akustischen Eingängen des in dem Aufnahmeraum 2 vorgesehenen akustischen Wandlers 20 gelangen können. Im Falle eines omni- oder unidirektionalen Wandlers genügt eine einzige Schalldrucköffnung 3, während im Falle eines bidirektionalen Wandlers zwei Schalldrucköffnungen 3a und 3b vorgesehen sind, die aus den vorgenannten Gründen und wie in Figur 1a gezeigt vorzugsweise rechtwinklig zueinander ausgerichtet sind. Die Schalldrucköffnungen sind jeweils durch ein akustisch transparentes Reibungselement verschlossen; das ist vorzugsweise ein textiles Flächengebilde oder eine Membran, die den Schalldruck zwar durchläßt, ihn jedoch aufgrund der dem Reibungselement eigenen akustischen Impedanz gleichzeitig beeinflußt. Es sind jedoch auch Ausführungen denkbar, bei denen eine Öffnung ohne Reibungselement ausgebildet ist. Bei anderen Ausführungsformen können die Öffnungen mit in der akustischen Impedanz verschiedenen (z.B. 100 und 500 Ohm) oder gleichen Reibungselementen verschlossen sein.

Die akustisch transparenten Reibungselemente 4 bzw. 4a, 4b sind in den in den Figuren 1 und 2 dargestellten Ausführungsformen so von der Wandung 3 umschlossen, daß sich das Wandungsmaterial kontinuierlich von einer Oberseite des Reibungselements auf die entsprechend gegenüberliegende Rückseite des Reibungselements erstreckt. Dies wird verfahrensmäßig erreicht, indem das Reibungselement in eine Form zum Spritzgießen der Kunststoffkapselung 10 eingelegt wird, bevor der Spritzgußvorgang beginnt. Das Reibungselement 4 wird sodann beim Einspritzvorgang derart umspritzt, daß sie fest und formschlüssig mit der Wandung 1 verbunden ist.

Während Figur 1 eine Kunststoffkapselung 10 für einen bidirektionalen Wandler 20 in zwei senkrecht zueinander liegenden Querschnitten zeigt, zeigt Figur 2 eine Kunststoffkapselung 10 für einen omnidirektionalen Wandler mit nur einem akustisch transparenten Reibungselement 4 ebenfalls im Querschnitt. An die Kunststoffkapselung 10 gemäß der in Figur 2 dargestellten Ausführungsform ist ein Verschlußdeckel 5 über ein Filmscharnier 6 unmittelbar angespritzt, so daß die Kunststoffkapselung problemlos verschlossen werden kann, indem der Verschlußdeckel 5 hinter die Nase 7 eingerastet wird.

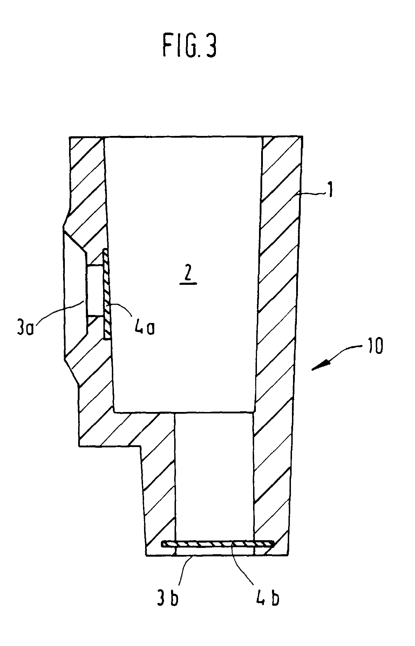

Figur 3 zeigt eine weitere beispielhafte Ausführungsform einer Kunststoffkapselung 10 gemäß der vorliegenden Erfindung. Während das akustisch transparente Reibungselement 4b entsprechend den zuvor beschriebenen Ausführungsformen gemäß Figur 1 und Figur 2 mit Kunststoffmaterial der Wandung 1 "umspritzt" ist, ist das Reibungselement 4a lediglich "angespritzt". Auch im Falle des Anspritzens handelt es sich um eine formschlüssige Verbindung zwischen dem Reibungselement 4a und der Wandung 1, da das Kunststoffmaterial in die Poren und Oberflächenrauhigkeiten des Reibungselements 4a beim Spritzgußvorgang eindringt und eine Verankerung bildet.

Das akustisch transparente Reibungselement kann jedoch auch alternativ durch Schnappverschluß in der Wandung fixiert werden, ähnlich dem in Figur 2 in Verbindung mit dem Verschlußdeckel 5 dargestellten Schnappverschluß, oder aber auch direkt auf die Oberfläche der Wandung 1 aufgeklebt werden.

Je nach Anforderung kann es auch sinnvoll sein, lediglich eine von mehreren Öffnungen mit einem akustisch transparenten Reibungselement zu verschließen.

Als akustisch transparentes Reibungselement eignet sich insbesondere jedes poröse Material, das den Schalldruck zwar durchläßt, ihn aber in charakteristischer Weise aufgrund seiner akustischen Impedanz beeinflußt. Geeignet sind daher insbesondere poröse Folien oder Membranen aus gesinterten oder ungesinterten synthetischen Polymeren wie zum Beispiel Polypropylen, Polyester, Polyamid, Polyether, Polytetrafluorethylen (PTFE), Polysulfon, Ethylen-Tetrafluorethylen-Copolymer, fluoriertes Ethylenpropylen (FEP) und Tetrafluorethylen-/Perfluor(Propylvinyl)-Ether-Copolymer (PFA). Die genannten Fluorpolymere werden wegen ihrer Verarbeitungseigenschaften, Temperaturbeständigkeit und chemischen Inertheit bevorzugt. Besonders bevorzugt werden poröse Membranen aus Polytetrafluorethylen. Diese können aus ästhetischen Gründen dunkle Pigmente oder Farbstoffe enthalten.

Poröse Polytetrafluorethylenfolien, die zur Verwendung mit der Erfindung geeignet sind, können nach bekannten Verfahren hergestellt werden, zum Beispiel durch Dehn- oder Ziehverfahren, durch Papierherstellungsverfahren, durch Verfahren in denen Füllmaterialien in das PTFE-Harz eingelagert und anschließend entfernt werden, um eine poröse Struktur zu hinterlassen, oder durch Pulversinterprozesse. Vorzugsweise wird als poröses PTFE eine poröse expandierte PTFE-Folie mit einer aus miteinander verbundenen Knoten und Fibrillen bestehenden Struktur verwendet, wie es in den US-Patenten Nr. 3,953,566 und 4,187,390 beschrieben ist, die das bevorzugte Material und die bevorzugten Verfahren zur Herstellung der Folie beschreiben. Die Knoten und Fibrillen definieren eine innere Struktur mit einem dreidimensionalen Netzwerk aus miteinander verbundenen Durchgängen und Durchlässen, die sich senkrecht von einer zur anderen Oberfläche und seitlich von einer zur anderen Kante durch die Membran hindurch erstrecken. Die poröse PTFE-Folie sollte eine Dicke im Bereich von 0,5 bis 1000 µm, vorzugsweise im Bereich von 5 bis 100 µm eine Porosität im Bereich von 20 bis 98%, vorzugsweise im Bereich von 80 bis 90%, eine Luftdurchlässigkeit von 0,05 bis 30 Gurley-Sekunden, vorzugsweise 0,5 bis 30 Gurley Sekunden, und eine Nennporengröße im Bereich von 0,05 bis 50 µm, vorzugsweise im Bereich von 3 bis 20 µm aufweisen.

Anstelle einer Membran kann aber auch ein textiles Flächengebilde mit entsprechenden Eigenschaften eingesetzt werden. Als textiles Flächengebilde eignen sich Gewebe, Gewirke, Vliese und Mikrofasertextilien aus synthetischem oder natürlichem Material.

Um die Stabilität der porösen Strukturen zu verbessern, wird das Reibungselement auf mindestens ein Trägermaterial wie ein Vlies, ein Gewebe, ein Gewirke, eine Lochplatte, ein Gitter oder nicht-gewebte Lagen aus unterschiedlichen Kunststoffmaterialien oder organischen Materialien aufgebracht. Als Trägermaterial eignet sich Polyester, Polyamid, Aramid oder ein Fluorpolymer, wobei nicht-gewebtes Polyester-Material mit dunkler Färbung bevorzugt wird. Ebenfalls besonders geeignet ist ein Trägermaterial aus Zellulose. Die Dicke eines solchen bevorzugten Trägermaterials liegt im Bereich von 40 bis 1000 μm, vorzugsweise 50 bis 200 μm.

Die akustisch transparenten Reibungselemente weisen üblicherweise sehr dünne Strukturen auf, um folgende Charakteristika zu erfüllen. Ihr akustischer Widerstandswert soll im Bereich von 0 bis 10000 Ohm liegen und der Schalldruckverlust zwischen 0 und 20 dB. Als mögliches Laminat für derartige Anwendungen eignet sich zum Beispiel das über die Anmelderin erhältliche GORE-TEX®-Laminat EV22209 oder EV22210.

Als Material für die Kunststoffkapselung eignen sich insbesondere vulkanisierbare Kunststoffe, wie zum Beispiel Silikone oder Naturkautschuk, und thermoplastische Kunststoffe, wie zum Beispiel Polypropylen, Polyethylen, Polycarbonate oder Polyamide sowie vorzugsweise thermoplastische Elastomere wie zum Beispiel Santoprene® (erhältlich über die Firma Montsanto/Italien) oder Hytrel® (erhältlich über die Firma DuPont). Alle diese Kunststoffe lassen sich im sogenannten Insert Moulding Spritzgußverfahren verwenden, welches den wesentlichen Vorteil bietet, daß das Spritzen der Kunststoffkapselung und ihre Verbindung mit den akustisch transparenten Reibungselementen in einem Arbeitsgang möglich ist. Insbesondere vereinen die thermoplastischen Elastomere die Eigenschaften, im Insert Moulding Spritzgußverfahren verarbeitet werden zu können und dabei ihre Elastomereigenschaften bewahren.

Die Herstellung der erfindungsgemäßen Kunststoffkapselung mit integriertem akustisch transparenten Reibungselement im Insert Moulding Spritzgußverfahren erfolgt folgendermaßen. Das Reibungselement wird zunächst in einem Spritzgußwerkzeug fixiert. Das kann dadurch bewirkt werden, daß das Reibungselement mittels einem Stempel so gegen eine Wandung des Spritzgußwerkzeugs gedrückt wird, daß nunmehr Randbereiche des Reibungselements in die Spritzgußform hineinragen. Dann erfolgt das Anspritzen des Kunststoffs mit dem Erfolg, daß die Oberfläche des Reibungselements mit der Oberfläche der Wandung der fertiggespritzten Kunststoffkapselung eben abschließt oder zumindest eine Seite des Reibungselements frei von Kunststoff bleibt. Wird dagegen das Reibungselement derart auf eine Erhöhung der Spritzgußformwandung gepreßt, daß sein Randbereich über diese Erhöhung seitlich übersteht, so ist es möglich, den Randbereich des Reibungselements zu umspritzen, so daß das Reibungselement wie in den Figuren 1 und 2 dargestellt, in der Wandung 1 fest eingefaßt ist. Bei einem Öffnungsdurchmesser von z.B. 5 mm genügt eine seitliche Einfassung des Reibungselementrandbereichs von etwa 0,5 mm. In besonderen Fällen kann es notwendig sein, das Reibungselement zwischen zwei Stempeln so zu fixieren, daß das Reibungselement beim Einspritzvorgang über die Stempel seitlich so hinausragt, daß der Randbereich des Reibungselements mit Spritzgußmaterial umspritzt werden kann. Die Herstellung erfolgt dann vorzugsweise gemäß dem in der EP 0 350 813 A2 von Sumitomo Electric Industries Limited beschriebenen Verfahren unter Verwendung zweier beweglicher Stempel.

Nach dem Entformen der Kunststoffkapselung aus dem Spritzgußwerkzeug kann der akustische Wandler problemlos und ohne Gefahr eines Ablösens der Membran in die Kunststoffkapselung eingesetzt werden.

Die Herstellung der Kunststoffkapselung mittels dem Insert Moulding Spritzgußverfahren bietet dabei den weiteren Vorteil, daß das Reibungselement absolut exakt an der gewünschten Stelle angeordnet ist, was bei den bekannten Verfahren problematisch ist.

Die erfindungsgemäße Kunststoffkapselung bietet außerdem den Vorteil, daß im Falle, daß alle Schalldrucköffnungen mit Reibungselementen verschlossen werden, die elektronischen Komponenten des akustischen Wandlers vor Umwelteinflüssen vollständig geschützt sind, insbesondere vor Staubpartikeln, Salzen und Flüssigkeiten. Dies gilt insbesondere, wenn die ePTFE-Membranen verwendet werden, denn diese sind zwar luftdurchlässig aber gleichzeitig wasserdicht und staubdicht. Der Wassereintrittsdruck solcher Reibungselemente sollte über 1 bar liegen.

Verwendete Testverfahren

Die Dicke der Membranen wurde mit einer Rachenlehre bestimmt, wobei ein Mittelwert von vier verschiedenen Stellen gebildet wurde.

Die Porosität ergibt sich nach der Formel

$$\text{Porosität} = 1 - \frac{\rho}{\rho_{\text{spez}}},$$

wobei $\rho$ die scheinbare Dichte angibt, die sich als Quotient aus Masse zu Volumen einschließlich Lufteinschlüssen und Poren ergibt, und $\rho_{\text{spez}}$ die spezifische Dichte des Materials angibt, wobei $\rho_{\text{spez}}$ für PTFE bei etwa 2,2 g/m$^3$ liegt.

Die Luftdurchlässigkeit wurde nach dem ASTM Testverfahren D726-84 mit einem Gurley Dichtemeßgerät von W. & L.E. Gurley & Sons bestimmt.

Der Wassereintrittsdruck wurde anhand einer ePTFE-Membran gemessen, die zwischen zwei Testplatten eingespannt wurde, von denen über die untere Platte ein Wasserdruck auf die Membran ausgeübt werden kann. Zwischen der oberen Platte und der Membran wurde ein pH-Papier zum Nachweis des Wasserdurchtritts durch die Membran angeordnet. Der Druck wurde in kleinen Stufen erhöht und nach jeder Erhöhung wurde 10 Sekunden abgewartet, bevor das pH-Papier untersucht wurde. Der Wassereintrittsdruck ist der Wasserdruck, bei dem sich das pH-Papier wegen Wasserdurchbruchs färbt, wobei die Testergebnisse von der Mitte der Membran genommen werden, um Einflüsse von Beschädigungen im Randbereich zu vermeiden.

**Patentansprüche**

1.  Kunststoffkapselung (10) für einen akustischen Wandler zum Einbau in ein Gehäuse insbesondere einer Telekommunikationseinrichtung, wobei

    - die Kunststoffkapselung eine Wandung (1) aufweist, die einen Aufnahmeraum (2) für einen akustischen Wandler definiert,
    - die Wandung (1) mindestens eine Schalldrucköffnung (3; 3a, 3b) aufweist, durch die ein Schalldruck einen akustischen Eingang eines in der Kunststoffkapselung aufgenommenen akustischen Wandlers erreichen kann,

    **wobei** mindestens eine der Schalldrucköffnungen (3; 3a, 3b) durch ein akustisch transparentes Reibungselement (4; 4a, 4b) verschlossen ist, um die akustischen Eigenschaften der Kunststoffkapselung gezielt zu beeinflussen.

2.  Gekapselter akustischer Wandler (20) zum Einbau in ein Gehäuse insbesondere einer Telekommunikationseinrichtung, wobei

    - eine Kunststoffkapselung (10) mit einer Wandung (1) vorgesehen ist, die einen Aufnahmeraum (2) definiert, in dem der akustische Wandler aufgenommen ist,
    - die Wandung mindestens eine Schalldrucköffnung (3; 3a, 3b) aufweist, durch die ein Schalldruck einen akustischen Eingang des in der Kunststoffkapselung aufgenommenen akustischen Wandlers erreichen kann, und
    - ein akustisch transparentes Reibungselement (4; 4a, 4b) vorgesehen ist, um die akustischen Eigenschaften des gekapselten akustischen Wandlers gezielt zu beeinflussen,

    **wobei** die Kunststoffkapselung (10) an mindestens einer der Schalldrucköffnungen (3; 3a, 3b) mit dem akustisch transparenten Reibungselement versehen und verschlossen ist.

3.  Vorrichtung nach einem der Ansprüche 1 oder 2, **wobei** die Kunststoffkapselung (10) zwei Schalldrucköffnungen (3a, 3b) aufweist.

4.  Vorrichtung nach einem der Ansprüche 1 bis 3, **wobei** die Flächennormalen der Schalldrucköffnungen (3a, 3b) rechtwinklig zueinander ausgerichtet sind.

5.  Vorrichtung nach einem der Ansprüche 1 bis 4, **wobei** das Reibungselement (4; 4a, 4b) formschlüssig mit der Kunststoffkapselung (10) verbunden ist.

6.  Vorrichtung nach Anspruch 5, **wobei** das Reibungselement in dem Kunststoffmaterial der Kunststoffkapselung durch eine Schnappverbindung eingeklemmt ist.

7.  Vorrichtung nach Anspruch 5, **wobei** zumindest Teilbereiche einer Oberfläche des Reibungselements (4a, Fig. 3) formschlüssig mit der Kunststoffkapselung (10) verbunden ist, indem das Kunststoffmaterial der Kunststoffkapselung in Poren und Rauhigkeiten der Reibungselementoberfläche eingreift, und wobei eine gegenüberliegende Oberfläche des Reibungselements frei von Kunststoff ist.

8.  Vorrichtung nach Anspruch 5, **wobei** sich das Kunststoffmaterial der Kunststoffkapselung (10) zumindest in einem Randbereich des Reibungsele-ments kontinuierlich von einer Reibungselement-oberfläche zu einer gegenüberliegenden Reibungs-elementoberfläche erstreckt.

9.  Vorrichtung nach einem der Ansprüche 1 bis 4, **wobei** das Reibungselement kraftschlüssig mit der Kunststoffkapselung (10) verbunden ist.

10. Vorrichtung nach einem der Ansprüche 1 bis 9, **wobei** die Kunststoffkapselung (10) ein integrales Bauteil aus vulkanisierbarem Kunststoff ist.

11. Vorrichtung nach Anspruch 10, **wobei** für die Kunststoffkapselung (10) ein Material verwendet wird, das aus Silikon oder Naturkautschuk ausgewählt ist.

12. Vorrichtung nach einem der Ansprüche 1 bis 9, **wobei** die Kunststoffkapselung (10) ein integrales Bauteil aus thermoplastischem Kunststoff ist.

13. Vorrichtung nach einem der Ansprüche 1 bis 9, **wobei** die Kunststoffkapselung (10) ein integrales Bauteil aus thermoplastischem Elastomer ist.

14. Vorrichtung nach einem der Ansprüche 1 bis 13, **wobei** das Reibungselement porös ist und eine Porosität von 20 bis 98 % aufweist.

15. Vorrichtung nach einem der Ansprüche 1 bis 14, **wobei** das Reibungselement eine Dicke im Bereich von 0,5 bis 1000 µm aufweist.

16. Vorrichtung nach Anspruch 15, **wobei** das Reibungselement eine Dicke von 5 bis 100 µm aufweist.

17. Vorrichtung nach einem der Ansprüche 1 bis 16, **wobei** das Reibungselement als textiles Flächengebilde ausgebildet ist.

18. Vorrichtung nach einem der Ansprüche 1 bis 16, **wobei** das Reibungselement eine Membran ist.

19. Vorrichtung nach Anspruch 18, **wobei** die Membran luftdurchlässig und wasserdicht ist.

20. Vorrichtung nach Anspruch 18 oder 19, **wobei** für die Membrane ein Material verwendet wird, welches ausgewählt ist aus einer der Gruppe der folgenden gesinterten oder ungesinterten Materialien: Polypropylen, Polyester, Polyamid, Polyether, Polytetrafluorethylen (PTFE), Polysulfon, Ethylen-Tetrafluorethylen-Copolymer, fluoriertes Ethylenpropylen (FEP) und Tetrafluorethylen-/Perfluor(Propylvinyl)-Ether-Copolymer(PFA).

21. Vorrichtung nach Anspruch 20, **wobei** die Membrane aus expandiertem Polytetrafluorethylen (ePTFE) ist.

22. Vorrichtung nach einem der Ansprüche 1 bis 21, **wobei** das Reibungselement auf mindestens ein Trägermaterial laminiert ist.

23. Vorrichtung nach Anspruch 22, **wobei** das Trägermaterial ein Vlies, ein Gewebe, ein Gewirk, eine Lochplatte oder ein Gitter ist.

24. Vorrichtung nach Anspruch 22 oder 23, **wobei** das Trägermaterial ein Polyester, Polyamid, Aramid oder Fluorpolymer ist.

25. Vorrichtung nach einem der Ansprüche 22 bis 24, **wobei** das Trägermaterial nicht-gewebtes Polyester-Material ist.

26. Vorrichtung nach Anspruch 22 oder 23, **wobei** das Trägermaterial ein Zellulosematerial ist.

27. Verfahren zur Herstellung eines gekapselten akustischen Wandlers (20) nach einem der Ansprüche 2 bis 26 zum Einbau in ein Gehäuse insbesondere einer Telekommunikationseinrichtung mit folgenden Schritten:

- Vorbereiten einer Spritzgußform zum Kunststoffspritzen einer einen Aufnahmeraum zur Aufnahme eines akustischen Wandlers definierenden Kunststoffkapselung (10) mit einer Wandung (1), in der mindestens eine Schalldrucköffnung (3; 3a, 3b) vorgesehen ist,
- Einlegen eines akustisch transparenten Reibungselements (4; 4a, 4b) in die Spritzgußform im Bereich der vorgesehenen Schalldrucköffnung der Kunststoffkapselung,
- Einspritzen eines Kunststoffs in die Spritzgußform und aushärten des Kunststoffs, so daß das Reibungselement mit der gespritzten Kunststoffkapselung (10) formschlüssig verbunden ist und die Schalldrucköffnung verschließt,
- Einsetzen des akustischen Wandlers in die spritzgegossene Kunststoffkapselung (10), so daß ein akustischer Eingang des akustischen Wandlers in Schalldruckverbindung mit der durch das Reibungselement verschlossenen Schalldrucköffnung steht.

28. Verfahren nach Anspruch 27, **wobei** das Reibungselement (4; 4a, 4b) so in die Spritzgußform eingelegt wird, daß Randbereiche des Reibungselements beim Einspritzen des Kunststoffs mit dem Kunststoff umspritzt werden.

29. Verfahren nach Anspruch 27, **wobei** das Reibungselement (4; 4a, 4b) so in die Spritzgußform eingelegt wird, daß der Kunststoff zumindest in Teilbereichen des Reibungselements nur einseitig an das Reibungselement angespritzt wird.

FIG.1A

FIG.1B

FIG.2A

FIG.2B

FIG.3

## FIG.4 A

## FIG.4 B